# EUROPEAN PATENT APPLICATION

(11) **EP 4 527 639 A1**
(43) Date of publication of application: **26.03.2025**
(21) Application number: 24195518.6
(22) Date of filing: 21.08.2024
(51) Int. Cl.: B60C 19/08, B60C 15/06

(54) **TIRE WITH ASYMMETRIC CONDUCTIVITY PATH**

(30) Priority: 28.08.2023 US 202318456546
(71) Applicant: The Goodyear Tire & Rubber Company, Akron, OH 44316 (US)
(72) Inventor: SCHWEITZER, Claude, L-7750 Colmar-Berg (LU); GABRIEL, Sabine Chantal, B-4920 Harze (BE); FOSAM, Richard, L-7462 Moesdorf (LU); VANDECLEE, Jean-Francois, B-6600 Bastogne (BE); REGNIER, Antoine Francois, B-6717 Attert (BE)
(74) Representative: Kutsch, Bernd

(57) **Abstract**

A tire (1) is disclosed comprising a tread (10), a pair of bead portions (7, 7') a pair of sidewalls (2, 2') with each of the sidewalls extending from the tread (10) to a respective bead portion (7, 7'), a pair of chafers (9, 9'), at least one carcass ply (3, 4), and one or more belt plies (5, 6) arranged radially between the tread (10) and the at least one carcass ply (3, 4) in a crown area of the tire (1). In one aspect, the tire (1) has a first sidewall (2) of the pair of sidewalls and a first chafer (9) of the pair of chafers, which is adjacent the first sidewall (2), having an electrical volume resistivity lower than 10⁸ Ohm·cm, and a second sidewall (2') of the pair of sidewalls and a second chafer (9') of the pair of chafers, which is adjacent the second sidewall (2'), having an electrical volume resistivity higher than 10⁹ Ohm·cm. On another aspect, the tread (10) comprises a first tread base layer (12) and a second tread base layer (12'), wherein the first tread base layer (12) has an electrical volume resistivity lower than 10⁸ Ohm·cm and wherein the second tread base layer (12') has an electrical volume resistivity higher than 10⁹ Ohm·cm.

## Description

### Field of the Invention

The present invention is directed to a tire having tire components of different electrical volume resistivity, in particular on different lateral sides of the tire. Moreover, the present invention is directed to a method of making such a tire.

### Background of the Invention

Tires need a certain electrical conductivity to allow conduction of electrostatic charges from the vehicle to the environment. In particular, this helps to prevent electrostatic shocks, e.g., when touching the car. This electrical conductivity is typically achieved by a sufficient amount of carbon black in rubber compositions in multiple tire components so as to provide a conductive pathway between the rim and the road surface. However, in many cases, the presence of carbon black is detrimental to reduced rolling resistance. It would be desirable to provide tires with reduced rolling resistance while ensuring sufficient electrical conductivity of the tire.

U.S. Patent Application Publication 2005/0103412 A1 discloses a tire with a rubber sidewall covering an internal electrically conductive rubber strip. This strip extends from an electrically conductive tread base layer of the tire into a bead area of the tire. While this design may provide an electrical path for some tire types, it is not suitable for other tire types and requires a special building process. Moreover, it is desirable to provide further advanced conductive passages through a tire.

### Summary of the Invention

The invention relates to a tire in accordance with claim 1.

Dependent claims refer to preferred embodiments of the invention.

In a first preferred aspect, the present invention is directed to a tire comprising a tread, a pair of bead portions, a pair of sidewalls, wherein each of the sidewalls extends from the tread to a respective bead portion, a pair of chafers, at least one carcass ply, and one or more belt plies arranged radially between the tread and the at least one carcass ply in a crown area of the tire. A first sidewall of the pair of sidewalls and a first chafer of the pair of chafers, which is adjacent the first sidewall, have an electrical volume resistivity lower than 10⁸ Ohm·cm. Furthermore, at least one of i) a second sidewall of the pair of sidewalls and ii) a second chafer of the pair of chafers, which is adjacent the second sidewall, has an electrical volume resistivity higher than 10⁹ Ohm cm.

In a second preferred aspect, the present invention is directed to a tire comprising a tread, a pair of bead portions, a pair of sidewalls, wherein each of the sidewalls extends from the tread to a respective bead portion, optionally a pair of chafers, at least one carcass ply, and one or more belt plies arranged radially between the tread and the at least one carcass ply in a crown area of the tire. Said tread comprises a first tread base layer and a second tread base layer, wherein the first tread base layer has an electrical volume resistivity lower than 10⁸ Ohm·cm and wherein the second tread base layer has an electrical volume resistivity higher than 10⁹ Ohm·cm. Furthermore, the first tread base layer is arranged axially beside the second tread base layer.

In a third preferred aspect, the present invention is directed to a tire comprising a tread, a pair of bead portions, a pair of sidewalls, wherein each of the sidewalls extends from the tread to a respective bead portion, a pair of chafers, at least one carcass ply, and one or more belt plies arranged radially between the tread and the at least one carcass ply in a crown area of the tire. Furthermore, each of a first sidewall of the pair of sidewalls and a first chafer of the pair of chafers, which is adjacent the first sidewall, comprises one or more rubber compositions comprising at least 39 phr of carbon black. Still in accordance with the third aspect, at least one of i) a second sidewall of the pair of sidewalls, and ii) a second chafer of the pair of chafers, which is adjacent the second sidewall, comprises one or more further rubber compositions comprising at most 35 phr of carbon black.

### Brief Description of the Drawings

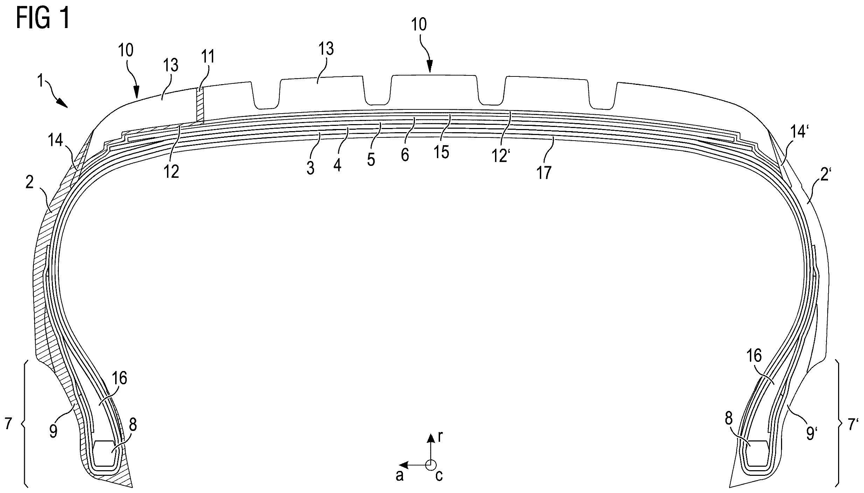

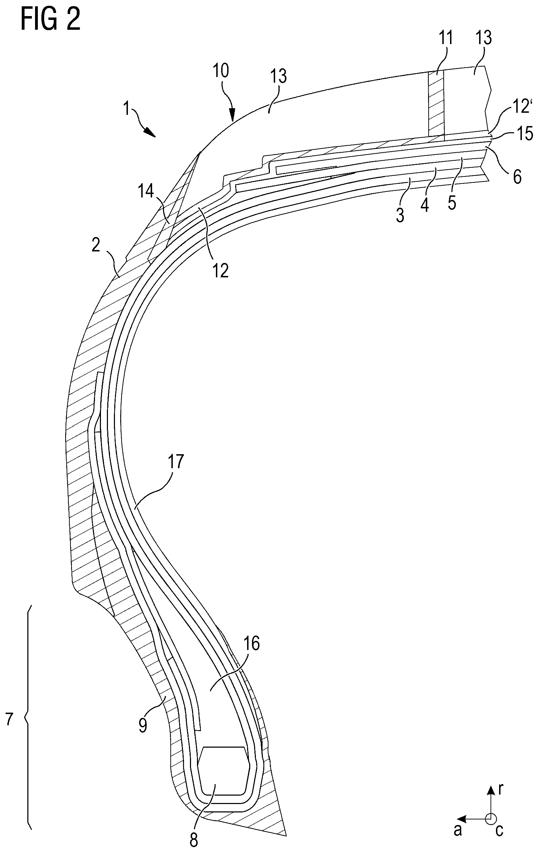

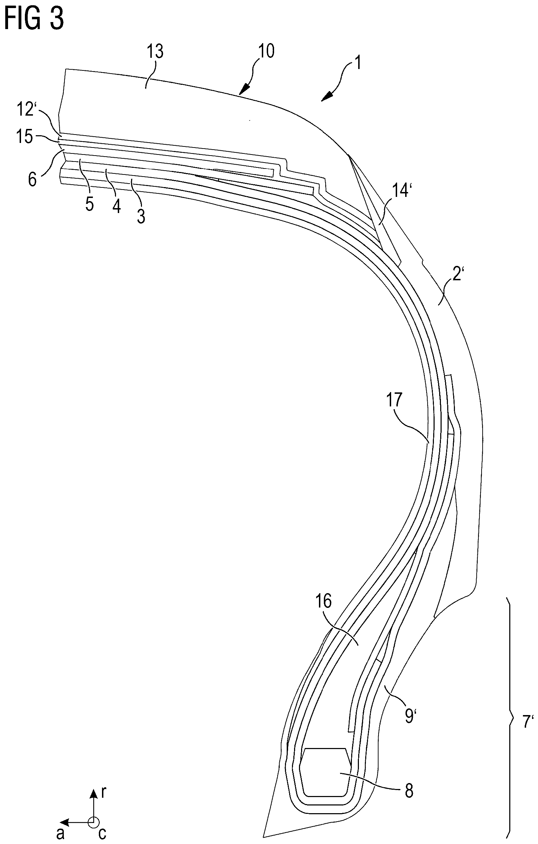

The invention will be described by way of example and with reference to the accompanying drawings in which: FIG. 1 is a cross-sectional view of a tire in accordance with an embodiment of the invention; FIG. 2 is a magnified cross-sectional view of the first lateral side of the tire shown in FIG. 1; and FIG. 3 is a magnified cross-sectional view of the second lateral side of the tire shown in FIG. 1.

### Detailed Description of Preferred Embodiments of the Invention

According to a first preferred aspect of the present invention, a tire comprises a tread, a pair of bead portions, a pair of sidewalls, wherein each of the sidewalls extends from the tread to a respective bead portion, a pair of chafers, at least one carcass ply, and one or more belt plies arranged radially between the tread and the at least one carcass ply in a crown area of the tire. A first sidewall (or in other words sidewall component) of the pair of sidewalls (or in other words sidewall components) and a first chafer of the pair of chafers, which is adjacent the first sidewall, have an electrical volume resistivity lower than 10⁸ Ohm·cm, and at least one of i) a second sidewall (or sidewall component) of the pair of sidewalls and ii) a second chafer of the pair of chafers, which is adjacent the second sidewall, has an electrical volume resistivity higher than 10⁹ Ohm·cm. In other words, each of the first sidewall and the first chafer has an electrical volume resistivity lower than 10⁸ Ohm·cm, whereas at least one of the second sidewall and the second chafer (preferably both) has an electrical volume resistivity higher than 10⁹ Ohm cm.

Therefore, both (laterally opposite) sides of the tire have a different conductivity. For instance, it is possible to use as a second sidewall, a sidewall having lower rolling resistance than the first sidewall, particularly as it is sufficient to have one electrically conductive side of the tire. In other words, the rubber compositions of the first sidewall (or sidewall component) and the chafer have a lower electrical volume resistivity than a different rubber composition of the second sidewall (or sidewall component) and/or second chafer.

Electrical volume resistivity is determined herein in accordance with ASTM D257-98, or equivalent.

In one embodiment, the second sidewall has an electrical volume resistivity higher than 10⁹ Ohm·cm.

In another embodiment, each of the second chafer and the second sidewall has an electrical volume resistivity higher than 10⁹ Ohm·cm. A chafer can be further described as at least partially surrounding a respective bead portion of the tire.

In another embodiment, the tread comprises a tread base or tread base layer having an electrical volume resistivity lower than 10⁸ Ohm·cm, and which is preferably in contact with said first sidewall, preferably via a skirt portion. Optionally, such a tread base or tread base layer is the only tread base or tread base layer of the tire or tread. Optionally, it extends at least over the maximum axial width of the axially widest belt ply of the tire.

In still another embodiment, said tread base or tread base layer further comprises a skirt portion at its axially outer side which is closest to the first sidewall, and which has an electrical volume resistivity lower than 10⁸ Ohm·cm. Preferably, the skirt portion is integrally formed with a rubber composition of the tread base or tread base layer. The skirt portion can also be called a wing portion. Said skirt or wing portion has preferably an axial width tapering into a radially outer and/or axially inner direction. In addition, or alternatively, it is arranged at least partially between the (adjacent and/or first) sidewall and an axially outer end portion of one or more tread layers, particularly tread cap layers. In particular, the skirt portion may be considered as a part of the tread base or tread base layer herein.

In another embodiment, the tread further comprises a tread strip having an electrical volume resistivity lower than 10⁸ Ohm·cm, which extends (preferably transversely) from a radially outer surface of the tread to a radially inner position of the tread. In particular, such a strip can provide electrically conductivity through an electrically non-conductive tread, particularly through electrically non-conductive tread cap layers.

In another embodiment, the tread further comprises at least one tread cap layer and one or more tread base layers, wherein the tread strip extends through the at least one tread cap layer to contact at least one of the tread base layers. In particular, it is possible that the tread base layer contacted by the tread strip is electrically conductive and/or has an electrical volume resistivity lower than 10⁸ Ohm·cm. Preferably, the tread base layer is in electrically conductive contact with the first sidewall, such as in direct contact or via contact through an electrically conductive skirt portion.

In another embodiment, the tire has a first tread base layer and a second tread base layer, wherein the first tread base layer has an electrical volume resistivity lower than 10⁸ Ohm·cm, and/or wherein the second tread base layer has an electrical volume resistivity higher than 10⁹ Ohm·cm. In particular, the tread strip preferably (physically) contacts at least the first tread base layer. Preferably, the first tread base layer is in electrically conductive contact with the first sidewall, such as in direct contact or via contact through an electrically conductive skirt portion.

In still another embodiment, the first tread base layer extends over at most 40% (preferably at most 30%, or more preferably at most 20%) of the (maximum) total axial width of the tread / a radially outermost tread cap layer, and wherein the second tread base layer extends over at least 60% (preferably at least 70%, or more preferably at least 80%) of the (maximum) total axial width of the tread / a radially outermost tread cap layer.

In still another embodiment, the first tread base layer extends at least over 10% of the (maximum) total axial width of the tread / a radially outermost tread cap layer, and/or the second tread base layer extends over at most 90% the (maximum) total axial width of the tread /a radially outermost tread cap layer.

In still another embodiment, the first tread base layer and the second tread base layer are arranged axially or laterally besides one another, wherein the first tread base layer is provided axially closer to the first sidewall than the second tread base layer. In other words, the first tread base layer is provided only on one axial or lateral side (or in other words half) of the tire, whereas the second tread base layer preferably extends over both sides (or halves) of the tire.

In still another embodiment, the tire further comprises a rubber strip having an electrical volume resistivity lower than 10⁸ Ohm·cm, which extends from a radially inner side of the tread to a radially outer portion of the first sidewall so as to electrically contact the radially inner side of the tread with the radially outer position of the first sidewall. Such a rubber strip can for instance electrically connect the tread with one or more non-conductive tread cap and/or base layers with the sidewall. Preferably, it is in contact with a tread strip as described in multiple embodiments herein.

In still another embodiment, the rubber strip extends perpendicular or essentially perpendicular to the circumferential direction of the tire. In other words, preferably, the length of the strip does not extend in a circumferential direction of the tire.

In still another embodiment, the rubber strip has any one or more or all of: a width, measured perpendicular to its length, within a range of 5 mm to 100 mm, preferably 10 mm to 80 mm, or more preferably 15 mm to 70 mm; a thickness, measured perpendicular to its length, within a range of 0.2 mm to 3 mm, preferably 0.2 mm to 2 mm, or to only 1 mm; an essentially flat and/or rectangular cross-section perpendicular to its length; and a rectangular cross-section perpendicular to its length having an aspect ratio of thickness to width within a range of 1 : 5 to 1 : 100, or preferably 1 : 10 to 1: 80.

In still another embodiment, the rubber strip is provided within the tire. Thus, the strip is not visible on the exterior of the tire and/or is protected by the sidewall of the tire against damages and weather conditions such as UV light.

In another embodiment, the tread strip extends transversely to the axial direction, e. g., essentially in a radial direction or in the radial direction, through the tread. Optionally, the tread strip extends also circumferentially through the tread, e.g., over the full circumference of the tread. Optionally, the tread strip electrically connects the radially outer surface of the tread (intended to contact the road) with the radially inner surface or bottom of the tread and/or with a tread base layer. In other words, it provides an electrically conductive path from said outer surface of the tread to a radially inner bottom (surface) of the tread. Preferably, transversely to the axial direction means herein, extending in a direction perpendicular to the axial direction, i.e., the radial direction, and/or extending in a direction of an angle with the radial direction, such as less than 20°, preferably less than 10°, less than 5°, or even less than 2°.

In another embodiment, the tread strip extends straightly or essentially straightly through the tread.

In still another embodiment, the tread strip has a maximum width within a range of 0.2 mm to 9 mm, measured in the axial direction of the tire.

In still another embodiment, apart from the tread strip, the at least one tread cap layer has an electrical volume resistivity higher than 10⁹ Ohm·cm.

In still another embodiment, apart from or except for the tread strip, the tread (optionally, each of its tread layers) has an electrical volume resistivity higher than 10⁹ Ohm·cm, or higher than 10¹⁰ Ohm·cm, preferably higher than 10¹¹ Ohm·cm, or higher than 10¹² Ohm·cm. Optionally said volume resistivity is at most 10¹⁴ Ohm·cm. If the tread comprises multiple tread rubber compositions, preferably each of these tread rubber compositions has an electrical volume resistivity within one of the above ranges.

In still another embodiment, the tread, or alternatively the tread cap and/or the tread base, has an electrical volume resistivity lower than 10⁸ Ohm·cm.

In still another embodiment, the tread comprises a vertically split tread cap, having at least one tread cap shoulder portion, wherein the tread cap shoulder portion (and/or the rubber composition of the tread cap shoulder portion) has an electrical volume resistivity lower than 10⁸ Ohmcm.

In still another embodiment, the tread comprises a first tread cap layer (intended to contact the road); a second tread cap layer provided radially below the first tread cap layer; a first tread base layer provided radially below the second tread cap layer; and a second tread base layer provided radially below the second tread cap layer and axially beside the first tread base layer. Preferably, one or more of said layers extend predominantly in an axial direction (and/or circumferentially around the tire).

In still another embodiment, the first tread base layer extends over less than 30% (and preferably more than 5%) of the total axial width of the first tread cap layer and is in (physical) contact with the tread strip at a radially inner end of the tread strip. Preferably, the first tread base layer is provided on the same lateral side or half of the tire as the first sidewall.

In still another embodiment, one or more of the tread, tread layers, sidewalls, chafers, skirts, tread strip, beads, apexes, bead portions, belt plies, and carcass plies can be considered as extending in a circumferential direction through and/or around the (whole) tire.

In still another embodiment, one or more of the tread strip, the first sidewall, the first chafer and the first tread base layer comprise one or more of: a) a rubber composition having an electrical volume resistivity lower than 10⁷ Ohm·cm, preferably lower than 0.5 x 10⁷ Ohm·cm; b) a rubber composition comprising at least or more than 39 phr of carbon black, preferably more than 40 phr of carbon black, or more than 50 phr of carbon black; and c) a rubber composition comprising carbon black having an iodine absorption of at least 100 g/kg, preferably within a range of 100 g/kg to 300 g/kg, even more preferably within a range of 100 g/kg to 250 g/kg, or within a range of 110 g/kg to 200 g/kg. In other words, one or more said components each comprise or consist of a rubber composition which has said electrical volume resistivity. The tread strip may comprise or consist of a tread strip rubber composition, the first sidewall may comprise or consist of a first sidewall rubber composition; the first chafer may comprise or consist of a first chafer rubber composition and the first tread base layer may comprise or consist of a first tread base layer rubber composition. It is noted that rubber compositions having the desired volume resistivities are as such known to the person skilled in the art. Similarly, rubber compositions for the second sidewall, the second chafer, tread cap layers, tread base layers are also known as such to the person skilled in the art, whereas the described combinations and/or arrangements of those have not been known.

Iodine absorption or iodine absorption values (sometimes also called iodine numbers or iodine absorption numbers) are determined herein according to ASTM D1510, or equivalent.

In still another embodiment, one or more of i) the at least one tread cap layer, ii) the second tread base layer, iii) the second sidewall; iv) the second chafer, v) the one or more belt plies, vi) the at least one carcass ply, and vii) an overlay of the tire comprise one or more of: a) a rubber composition having an electrical volume resistivity which is higher than 10⁹ Ohm cm, preferably higher than 10¹⁰ Ohm·cm or even higher than 10¹² Ohm·cm; b) a rubber composition comprising less than 45 phr carbon black, preferably less than 40 phr of carbon black, more preferably less than 35 phr of carbon black, or less than 20 phr of carbon black, or even less than 10 phr of carbon black; and c) a rubber composition comprising carbon black having an iodine absorption of less than 90 g/kg, preferably less than 80 g/kg, or less than 50 g/kg.

In other words, each of these components can comprise or consist of a rubber composition having such a volume resistivity and/or carbon black content. In particular, a tread cap layer may comprise or consist of a tread cap layer rubber composition, the second tread base layer may comprise or consist of a second tread base layer rubber composition, the second sidewall may comprise or consist of a second sidewall rubber composition, the second chafer may comprise or consist of a second chafer rubber composition, the at least one carcass ply may comprise a carcass ply (coating) rubber composition, and the one or more belt plies may comprise a belt ply (coating) rubber composition. Each of these rubber compositions is preferably within the claimed resistivity ranges and/or has the mentioned amount of carbon black. A minimum amount of carbon black is preferably 0.1 phr in one or more of the above compositions. However, it may also be zero, particularly in components not visible on the surface of the tire.

In still another embodiment each chafer contacts a radially inner end portion of the respective sidewall and extends to a portion radially below a bead of the respective bead portion.

In still another embodiment, the first sidewall and/or the first chafer comprises a rubber composition having a tangent delta value higher than 0.09, preferably higher than 0.1. Alternatively, or in addition, the second sidewall and/or the second chafer comprises a rubber composition having a tangent delta value of less than 0.09, preferably less than 0.08.

According to the second aspect, a tire comprises a tread, a pair of bead portions, a pair of sidewalls, wherein each of the sidewalls extends from the tread to a respective bead portion, optionally a pair of chafers, at least one carcass ply, and one or more belt plies arranged radially between the tread and the at least one carcass ply in a crown area of the tire. The tread comprises a first tread base layer and a second tread base layer, wherein the first tread base layer has an electrical volume resistivity lower than 10⁸ Ohm cm and wherein the second tread base layer has an electrical volume resistivity higher than 10⁹ Ohm·cm. The first tread base layer is arranged axially beside the second tread base layer.

Thus, while the first tread base layer (axially next to the second tread base layer) can be considered to be electrically conductive, the second tread base layer is not electrically conductive. By providing the electrically conductive first tread base layer, an electrical pathway can be provided at least on one lateral/axial side of the tire. In particular, it is possible to provide a second tread base layer having a lower hysteresis and/or rolling resistance than the first tread base layer.

In one embodiment, the first tread base layer extends over at most 40% of the total axial width of the tread, and/or the second tread base layer extends over at least 60% of the total axial width of the tread. Thus, the first tread base layer has a relatively small extension and/or amount of rubber composition compared to the second tread base layer.

In another embodiment, a first sidewall of the pair of sidewalls and preferably a first chafer of the pair of chafers, which is adjacent the first sidewall, (each) have an electrical volume resistivity lower than 10⁸ Ohm·cm. Preferably, said first sidewall is in contact with the first tread base layer. Optionally, at least one of a second sidewall of the pair of sidewalls and a second chafer of the pair of chafers, which is adjacent the second sidewall, has an electrical volume resistivity higher than 10⁹ Ohm·cm. Alternatively, at least one of a second sidewall of the pair of sidewalls and a second chafer of the pair of chafers, which is adjacent the second sidewall, has an electrical volume resistivity lower than 10⁸ Ohm·cm.

In another embodiment, the first sidewall and the second sidewall comprise or consist of the same rubber composition; and/or the first chafer and the second chafer comprise or consist of the same rubber composition.

Preferably, a chafer contacts and adjacent sidewall herein.

In still another embodiment, the first tread base layer comprises a rubber composition having a tangent delta value higher than 0.09, preferably higher than 0.1. Alternatively, or in addition, the second tread base layer comprises a rubber composition having a tangent delta value of less than 0.09, preferably less than 0.08.

According to the third aspect, a tire comprises a tread, a pair of bead portions, a pair of sidewalls, wherein each of the sidewalls extends from the tread to a respective bead portion, a pair of chafers, at least one carcass ply, and one or more belt plies arranged radially between the tread and the at least one carcass ply in a crown area of the tire. Furthermore, each of a first sidewall of the pair of sidewalls and a first chafer of the pair of chafers, which is adjacent the first sidewall, comprises (or consists of) one or more rubber compositions comprising at least 39 phr of carbon black (or more than 40 phr or 50 phr of carbon black). Still in accordance with the third aspect, at least one of (preferably both of) i) a second sidewall of the pair of sidewalls, and ii) a second chafer of the pair of chafers, which is adjacent the second sidewall, comprises (or consists of) one or more further rubber compositions comprising at most 35 phr of carbon black (preferably, at most 20 phr, at most 10 phr, or at most 5 phr of carbon black).

It is emphasized that each aspect of the present invention can be combined with one or more of the embodiments or features mentioned in relation to another aspect of the present invention. Merely for the sake of conciseness, those are not literally repeated herein again.

In a preferred embodiment, the tire in accordance with one of the aspects is selected from one or more of a radial tire, a pneumatic tire, a passenger car tire.

In another embodiment, a rubber composition may include at least one or more and/or one or more additional diene-based rubbers, such as one or more of styrene butadiene rubber (SBR, e.g., S-SBR or E-SBR), natural rubber (NR), synthetic polyisoprene (PI), and polybutadiene rubber (BR).

In one embodiment, a synthetic or natural polyisoprene rubber may be used. Synthetic cis-1,4-polyisoprene and natural rubber are as such well known to those having skill in the rubber art. In particular, the cis 1,4-microstructure content may be at least 90% and is typically at least 95% or even higher.

In one embodiment, cis-1,4-polybutadiene rubber (BR) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95 °C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646.

A glass transition temperature, or Tg, of an elastomer represents the glass transition temperature of the respective elastomer in its uncured state. A glass transition temperature of an elastomer composition represents the glass transition temperature of the elastomer composition in its cured state. A Tg is determined as a peak midpoint by a differential scanning calorimeter (DSC) at a temperature rate of increase of 20° C per minute, according to ASTM D3418 or equivalent.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers / elastomers than explicitly mentioned in the claims, provided that the phr value of the claimed rubbers / elastomers is in accordance with claimed phr ranges and the amount of all rubbers / elastomers in the composition results in total in 100 parts of rubber. The terms "compound" and "composition" and "formulation" may be used herein interchangeably, unless indicated otherwise. The terms "rubber" and "elastomer" may also be interchangeably used herein.

In another embodiment, the rubber composition includes from 1 phr to 80 phr, or from 5 phr to 80 phr, of a resin, preferably having a glass transition temperature Tg greater than 20° C. A Tg for resins is determined as a peak midpoint by a differential scanning calorimeter (DSC) at a temperature rate of increase of 10° C per minute, according to ASTM D6604 or equivalent. Preferably, the resin has a softening point above 70° C as determined by ASTM E28 which might sometimes be referred to as a ring and ball softening point. In one embodiment, the rubber composition includes from 10 phr to 60 phr or from 20 phr to 60 phr or from 30 phr to 60 phr of resin, particularly if the rubber composition is a tread cap rubber composition.

In another embodiment, the resin is selected from the group consisting of coumarone-indene resin, petroleum hydrocarbon resin, terpene polymers/resins, styrene/alphamethylstyrene resins, terpene phenol resin, rosin derived resins and copolymers and/or mixtures thereof.

A coumarone-indene resin preferably contains coumarone and indene as monomer components making up the resin skeleton (main chain). Monomer ingredients other than coumarone and indene which may be incorporated into the skeleton are, for example, methyl coumarone, styrene, alphamethylstyrene, methylindene, vinyltoluene, dicyclopentadiene, cyclopentadiene, and diolefins such as isoprene and piperlyene. Coumarone-indene resins have preferably softening points ranging from 10° C to 160° C (as measured by the ball-and-ring method). Even more preferably, the softening point ranges from 30° C to 100° C.

Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include any C5 species (olefins and diolefines containing an average of five carbon atoms) such as cyclopentadiene, dicyclopentadiene, diolefins such as isoprene and piperylene, and any C9 species (olefins and diolefins containing an average of 9 carbon atoms) such as vinyltoluene, alphamethylstyrene and indene. Such resins are made by any mixture formed from C5 and C9 species mentioned above, and are known as C5/C9 copolymer resins. Petroleum resins are typically available with softening points ranging from 10° C. to 120° C. Preferably, the softening point ranges from 30 to 100° C.

In an embodiment, C5 resins are aliphatic resins made from one or more of the following monomers: 1,3-pentadiene (e.g., cis or trans), 2-methyl-2-butene, cyclopentene, cyclopentadiene, and dicyclopentadiene.

In another embodiment, a C9 resin is a resin made from one or more aromatic monomers, preferably chosen from the group of indene, methylindene, vinyl toluene, styrene and methylstyrene (such as alpha-methylstyrene).

In still another embodiment, a C9 modified resin is a resin (such as a C5 resin) which has been modified or functionalized with one or more aromatic monomers, preferably chosen from the group of indene, methylindene, vinyl toluene, styrene and methylstyrene (such as alpha methylstyrene).

Terpene resins are preferably comprised of polymers of at least one of limonene, alpha pinene, beta pinene and delta-3-carene. Such resins are available with softening points ranging from 10° C to 135° C.

Terpene-phenol resins may be derived by copolymerization of phenolic monomers with terpenes such as limonenes, pinenes and delta-3-carene.

Representative for resins derived from rosins and derivatives thereof are, for example, gum rosin, wood rosin and tall oil rosin. Gum rosin, wood rosin and tall oil rosin have similar compositions, although the amount of components of the rosins may vary. Such resins may be dimerized, polymerized or disproportionated. Such resins may be in the form of esters of rosin acids and polyols such as pentaerythritol or glycol.

A styrene/alphamethylstyrene resin is considered herein to be a (preferably relatively short chain) copolymer of styrene and alphamethylstyrene with a styrene/alphamethylstyrene molar ratio in a range of about 0.05 to about 1.50. In one aspect, such a resin can be suitably prepared, for example, by cationic copolymerization of styrene and alphamethylstyrene in a hydrocarbon solvent. Thus, the contemplated styrene/alphamethylstyrene resin can be characterized, for example, by its chemical structure, namely its styrene and alphamethylstyrene contents and by its glass transition temperature, molecular weight and molecular weight distribution.

In one embodiment, said resin is partially or fully hydrogenated.

In an embodiment, a rubber composition comprises oil, such as processing oil. Oil may be included in the rubber composition as extending oil typically used to extend elastomers. Oil may also be included in the rubber composition by addition of the oil directly during rubber compounding. Oil used may include both extending oil present in the elastomers, and (process) oil added during compounding. Suitable oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils. If used, the rubber composition may also include up to 40 phr of processing oil, preferably between 1 phr and 25 phr. Or can be, alternatively less than 10 phr oil, preferably less than 5 phr. Glass transition temperatures Tg for oils are determined as a peak midpoint by a differential scanning calorimeter (DSC) at a temperature rate of increase of 10°C per minute, according to ASTM E1356, or equivalent.

In an embodiment, a rubber composition comprises silica, particularly if it is a tread rubber composition. Silica may be for instance pyrogenic/fumed or precipitated silica. In preferred embodiments, precipitated silica is used. Silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined according to ASTM D6556 or equivalent and is described in the Journal of the American Chemical Society, Volume 60, Page 304 (1930). Silica may also be characterized by having a dibutylphthalate (DBP) absorption value in a range of 100 cm³/100g to 400 cm³/100g, alternatively 150 cm³/100g to 300 cm³/100g which is determined according to ASTM D 2414 or equivalent. Silica may have an average ultimate particle size, for example, in the range of 0.01 to 0.05 micron as determined by the electron microscope, although the silica particles may be even smaller, or possibly larger, in size. Ranges of silica use could be for instance between 1 and 120 phr, preferably in a range of between 10 phr and 70 phr herein. Various commercially available silicas may be used, such as, only for example herein, and without limitation, silicas commercially available from PPG Industries under the Hi-Sil trademark with designations 210, 315G and EZ160G; silicas available from Solvay, with, for example, designations of Z1165MP and Premium200MP; and silicas available from EvonikAG with, for example, designations VN2 and Ultrasil 6000GR and 9100GR.

Some examples of pre-treated silicas, which can be used, (i.e., silicas that have been pre-surface treated with a silane) which are suitable for use in the practice of this invention include, but are not limited to, Ciptane^{®} 255 LD and Ciptane^{®} LP (PPG Industries) silicas that have been pre-treated with a mercaptosilane, and Coupsil^{®} 8113 (Degussa) that is the product of the reaction between organosilane Bis(triethoxysilylpropyl) polysulfide (Si69) and Ultrasil^{®} VN3 silica, and Coupsil^{®} 6508, Agilon^{®} 400 silica from PPG Industries, Agilon^{®} 454 silica from PPG Industries, and Agilon^{®} 458 silica from PPG Industries.

In an embodiment, the rubber composition may include carbon black. Representative examples of such carbon blacks include, for instance, N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades.

In one embodiment, a rubber composition may contain sulfur containing organosilicon compounds or silanes. Examples of suitable sulfur containing organosilicon compounds are of the formula:

Z - Alk - Sₙ - Alk - Z I

in which Z is selected from the group consisting of 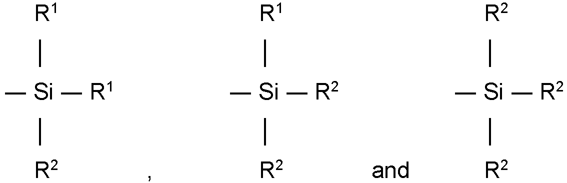 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 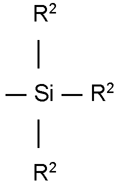 where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. The amount of the compound may range from 0.5 phr to 20 phr, particularly in the case of tread rubber compositions. In one embodiment, the amount will range from 1 phr to 10 phr.

In another embodiment, a rubber composition comprises from 0.1 to 5 phr of a cobalt salt, and more preferably from 0.2 phr to 2 phr of a cobalt salt. This content may be of particular interest if used in ply coating compounds as it may amongst others improve the adhesion of the rubber coating to the ply or belt material, in particular if such material is metal, preferably brass coated metal as for instance steel. However, in another embodiment the rubber composition may be essentially cobalt free, e.g. comprise less than 0.1 phr cobalt salt or 0 phr cobalt salt. The cobalt compound will typically be a cobalt salt of a fatty acid or a cobalt salt of an aliphatic or alicyclic carboxylic acid containing from 6 to 30 carbon atoms. Some representative examples of cobalt compounds which may be used include the cobalt salts, cobalt naphthanate, cobalt linoleate, cobalt stearate, cobalt oleate, cobalt acetate, cobalt neodecanoate, cobalt tallate, cobalt resinate, cobalt acetonate, or in situ salts prepared from cobalt hydroxide and an organic acid such as naphthenic acid, stearic acid, oleic acid, acetic acid, linoleic acid and the like. Additional cobalt compounds which may be used are known under the tradename Manobond^{™} C. Manobond^{™} C is a cobalt complex of an organic acid containing boron manufactured by Manchem Company. Manobond^{™} C is described in British Patent No. 972,804.

It is readily understood by those having skill in the art that a rubber composition may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). The terms "nonproductive" and "productive" mix stages are well known to those having skill in the rubber mixing art. In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of the pneumatic tire of the present invention may for instance be carried out at conventional temperatures ranging from 100°C to 200°C. In one embodiment, the vulcanization is conducted at temperatures which are within a range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

In a fourth aspect of the present invention, the present invention is directed to a method of building a tire in accordance with the first and/or second aspect of the invention and/or one or more of its embodiments.

In one embodiment, the method includes the step of extruding the tread having a tread cap (comprising optionally a first tread cap layer and a second tread cap layer), a first tread base layer, and a second tread base layer at the same time.

In another embodiment, the tread is extruded with one of a triplex, a quadruplex and a pentaplex extruder.

In still another embodiment, the tread is extruded with one of the above extruders, optionally having an additional screw for extruding a tread strip in accordance with one of the above mentioned embodiments.

In one embodiment, the tread is extruded with a triplex extruder, preferably in case of only one tread cap layer / a mono cap.

In one embodiment, the tread is extruded with a quadruplex extruder, preferably in the case in which the tread cap comprises the first tread cap layer and the second tread cap layer.

In another embodiment, the first tread cap layer, the second tread cap layer, the first tread base layer, and the second tread base layer each comprise or consist of different rubber compositions.

In yet another embodiment, one or both of the tread base layers comprise a (integrally formed) skirt portion.

In still another embodiment, the tread comprises a tread strip which extends from a radially outer surface of the tread to a radially inner position of the tread, and which is optionally integrally formed with the first tread base layer.

The above aspects, embodiments, and features mentioned therein may be combined with one another.

Figure 1 shows a tire 1 in accordance with a preferred embodiment of the present invention. The tire 1 has a tread 10, sidewalls 2, 2', a first carcass ply 3, a second carcass ply 4, a first belt ply 5, a second belt ply 6, bead portions 7, 7', beads 8, chafers 9, 9', a tread strip 11, a tread base layers 12, 12', a tread cap layer 13, skirt portions 14, 14', an overlay 15, (bead) apexes 16, and an innerliner 17.

In accordance with this embodiment of the present invention, the tread 10 has a mono-cap construction or has, in other words, a single tread cap layer 13, which is supported by two axially adjacent tread base layers 12, 12'. In other embodiments (not explicitly shown herein), it is also possible that the tread cap comprises multiple tread cap layers, preferably supported by one or more tread base layers. Moreover, the tread 10 comprises an electrically conductive tread (rubber) strip 11 (sometimes also referred to as conductive chimney) which extends transversely through the tread 10, particularly through the tread cap layer 13. The tread base comprises a first tread base layer 12 comprising a first rubber composition, and a second tread base layer 12' comprising a second, different rubber composition. In the present embodiment, the tread strip 11 and the tread base layer 12 are shown as separate members but they may also be integrally formed from the same rubber composition as a single member. In other words, the tread base layer 12 could have an extension transversely extending from the bottom of the tread towards the radially outer surface of the tread. Moreover, the tire 1 of the present embodiment has a wing or skirt portion 14 which is arranged between the sidewall 2 and the tread cap layer 13. While the skirt portion 14 is shown herein as a separate member, it is also possible that the skirt portion 14 is integrally formed with the tread base layer 12, and optionally consists of the same (first) tread base rubber composition. Alternatively, it is also possible that a tire does not have such a skirt portion at all. For instance, the sidewall 2 could directly touch the tread 10 in such an embodiment (not shown).

The axial direction a, the circumferential direction c and the radial direction r are indicated in Figures 1-3 for easier orientation. The axial direction a is parallel to the axis of rotation of the tire. The circumferential direction c is parallel to the circumference of the tire, e.g., parallel to the equatorial plane of the tire. Moreover, the radial direction r is perpendicular to the axial direction a and/or the circumferential direction c. When reference is made to one or more of these directions, such references are not limited to special orientations of these directions, unless indicated otherwise herein.

As shown in Figures 1 and 2, utilizing the same reference signs where applicable, to allow electrical conduction of electrical charges through the tread 10, the tread 10 has an electrically conductive tread strip 11 (comprising or consisting of an electrically conductive tread strip rubber composition). Preferably, the rubber composition(s) of the tread cap layer 13 and the tread base layer 12' are electrically non-conductive, whereas (the rubber compositions of) the tread strip 11 and the tread base layer 12 are electrically conductive. The skirt portion 14, the sidewall 2 and the chafer 9 are also electrically conductive so as to provide an electrical pathway from the bead portion 7, which comes into contact with the rim when mounted on a rim, to the radially outer surface of the tread 10. For the sake of better comprehensibility, and in order to illustrate the electrical pathway through the tire 1, the tread strip 11, the tread base layer 12 the skirt portion 14, the sidewall 2 and the chafer 9 are shown with the same shading in Figures 1 and 2. However, it is remarked that these members do not need to have the same rubber composition.

Electrically conductive is understood herein as having an electrical volume resistivity lower than 10⁸ Ohm·cm. Being not electrically conductive, or electrically non-conductive / insulating, is understood herein as having an electrical volume resistivity higher than 10⁹ Ohm·cm, unless indicated otherwise herein.

In a preferred embodiment, the rubber compositions of the tread strip 11, the tread base layer 12, the skirt portion 14, the sidewall 2 and the chafer 9 each have more than 50 phr of carbon black.

As an example, conductive sidewall 2 and/or chafer 9 rubber compositions can comprise 25 phr natural rubber, 75 phr polybutadiene, 70 phr of carbon black, 14 phr of oil, 2 phr stearic acid, 7 phr of antidegradants, 2.5 phr of zinc oxide, 2 phr of sulfur, and 1.7 phr of accelerator. The electrical volume resistivity of this rubber composition has been determined as being below 1 x 10⁵ Ohm·cm. Moreover, an indicator for the hysteresis of the compound has been determined, i.e., with a tangent delta at 10% strain which is about 0.19. G' and tangent delta are determined herein with an RPA 2000^{™} Rubber Process Analyzer of the company Alpha Technologies, based on ASTM D5289 or equivalent.

Other embodiments of such rubber compositions for a sidewall 2 or chafer 9 can include from 20 to 50 phr of natural rubber or synthetic polyisoprene, from 50 to 80 phr of polybutadiene rubber, from 50 phr to 90 phr (preferably from 60 phr or 65 phr to 85 phr or 80 phr) of carbon black. Optionally, such a composition further comprises one or more of: from 1 phr to 25 phr of oil, from 3 phr to 15 phr of antidegradants (preferably from 6 phr to 10 phr of antidegradants), 0.5 phr to 5 phr of one or more tackifiers (such as phenolic resins), 0.5 phr to 5 phr of stearic acid, 0.5 phr to 5 phr of zinc oxide, 0.5 phr to 5 phr of sulfur, 0.5 phr to 4 phr one or more vulcanization accelerators.

In a example, one or more of a tread base 12, a skirt 14, and/or tread strip 11 rubber compositions comprise 30 phr of polybutadiene rubber, 40 phr of polyisoprene, 30 phr of styrene butadiene rubber, 70 phr of carbon black, 31 phr of oil, 5 phr of a phenolic resin, 3.8 phr of waxes, 6.7 phr of antidegradants (here including phenylene diamine types), 1 phr of stearic acid, 0.9 phr of accelerators, 2 phr of zinc oxide and 2.5 phr of sulfur.

While some preferred rubber compositions have been provided above, other compositions may be possible. In particular, other amounts of natural rubber, polyisoprene, polybutadiene rubber, and/or styrene butadiene rubber may be used.

In view of the low electrical resistivity of the left-hand (lateral/axial) side of the tire 1 as shown in Figure 1, it is possible to use electrically non-conductive components on the right-hand side of the tire shown in Figure 1. The right-hand side of the tire 1, as shown in Figure 1, is also depicted in Figure 3, using the same reference signs as in Figure 1 where applicable. In particular, it is possible to use a tread base layer 12' having a second rubber composition which is not electrically conductive but has for instance a lower rolling resistance compared to the first tread base rubber composition of the tread base layer 12. In addition, or alternatively, it is possible that the skirt portion 14' on the right-hand side of the tire 1 is also non-conductive. The same applies to the sidewall 2' and the chafer 9' in the bead portion 7'. While the tread base is shown herein with two tread base layers 12, 12', wherein one of the layers is conductive and the other one is not, it is also possible to have only a single tread base or tread base layer which comprises only one electrically conductive rubber composition. In particular, this may reduce building complexity. In such an embodiment, the sidewall 2' and chafer 9' would preferably be electrically non-conductive, in other words, such as comprise a limited amount of carbon black which helps to reduce overall rolling resistance of the tire. Similar to the left-hand side of the tire 1 shown in Figures 1 and 2, the skirt portion 14' shown in Figure 3 may be integrally formed with the tread base layer 12' or be omitted completely.

In an embodiment, the sidewall 2' and/or chafer 9' have a rubber composition comprising 40 phr natural rubber, 60 phr polybutadiene, 40 phr of carbon black, 4 phr of oil, 1 phr of stearic acid, 3 phr of tackifier (e.g., a phenolic resin), 8 phr of antidegradants, 2 phr of zinc oxide, 3.5 phr of sulfur, 1 phr of accelerator. The electrical volume resistivity of this rubber composition has been determined as about 1.2 x 10¹² Ohm·cm. The hysteresis indicator tangent delta at 10% strain has been determined at 0.07 which is significantly lower than the hysteresis of the rubber compound of the sidewall 2 and/or chafer 9. In the present embodiment, the same rubber composition has been used for the chafer 9'.

In alternative embodiments, the (electrically non-conductive) sidewall 2' and/or chafer 9' rubber composition may comprise from 20 to 50 phr natural rubber or synthetic polyisoprene, from 50 to 80 phr of polybutadiene rubber, from 0.1 phr to 45 phr (preferably from 0.1 phr to 40 phr or to 35 phr) of carbon black. Optionally, such a composition further comprises one or more of: from 1 phr to 10 phr of oil, from 3 phr to 15 phr of antidegradants (preferably from 6 phr to 10 phr of antidegradants), 0.5 phr to 5 phr of one or more tackifiers (such as phenolic resins), 0.5 phr to 5 phr of stearic acid, 0.5 phr to 5 phr of zinc oxide, 0.5 phr to 5 phr of sulfur, 0.5 phr to 4 phr of one or more vulcanization accelerators.

In one example, one or more of a tread base 12' and/or a skirt 14' rubber composition comprise 30 phr of polybutadiene rubber, 40 phr of polyisoprene, 30 phr of styrene butadiene rubber, 70 phr of silica, 6 phr of silane, 31 phr of oil, 5 phr of a phenolic resin, 3.8 phr of waxes, 6.7 phr of antidegradants (including phenylene diamine types), 1 phr of stearic acid, 0.9 phr of accelerators, 2 phr of zinc oxide, and 2.5 phr of sulfur. In other words, this is an example of a non-conductive tread base and/or skirt rubber composition.

While the above rubber compositions are preferred examples, other compositions may be possible. In particular, other amounts of natural rubber, polyisoprene, polybutadiene rubber, and/or styrene butadiene rubber may be used.

The rubber compositions of the apexes 16 and the structure of the beads 8 are preferably the same or similar on both lateral sides of the tire to reduce the number of different components to build the tire 1.

In summary, the present invention provides an advanced electrical path between the rim or bead portion of the tire and the road or tire tread. Such a path can be provided at limited costs and/or with a limited amount of materials or a limited number of components. It is also possible to efficiently manufacture such a tire. Moreover, the tire can be provided with a reduced rolling resistance.

## Claims

1. A tire comprising a tread (10), a pair of bead portions (7, 7') a pair of sidewalls (2, 2') with each of the sidewalls extending from the tread (10) to a respective bead portion (7, 7'), a pair of chafers (9, 9'), at least one carcass ply (3, 4), and one or more belt plies (5, 6) arranged radially between the tread (10) and the at least one carcass ply (3, 4) in a crown area of the tire (1), wherein
(i) a first sidewall (2) of the pair of sidewalls and a first chafer (9) of the pair of chafers, which is adjacent the first sidewall (2), have an electrical volume resistivity lower than 10⁸ Ohm·cm and/or comprise one or more rubber compositions comprising at least 39 phr of carbon black; and wherein a second sidewall (2') of the pair of sidewalls and a second chafer (9') of the pair of chafers, which is adjacent the second sidewall (2'), has an electrical volume resistivity higher than 10⁹ Ohm·cm and/or comprise one or more rubber compositions comprising at most 35 phr of carbon black; and/or
(ii) the tread (10) comprises a first tread base layer (12) and a second tread base layer (12'), wherein the first tread base layer (12) has an electrical volume resistivity lower than 10⁸ Ohm·cm and/or comprises a rubber composition comprising at least 39 phr of carbon black; and wherein the second tread base layer (12') has an electrical volume resistivity higher than 10⁹ Ohm·cm and/or comprises a rubber composition comprising at most 35 phr of carbon black; the first tread base layer (12) being arranged axially beside the second tread base layer (12').

2. The tire according to claim 1, wherein the tread (10) comprises a tread base (12) having an electrical volume resistivity lower than 10⁸ Ohm·cm or said first tread base layer (12) having an electrical volume resistivity lower than 10⁸ Ohm cm, said tread base (12) or first tread base layer (12) being at least indirectly in contact with said first sidewall (2).

3. The tire according to claim 1 or 2, wherein the tread base (12) or the first tread base layer (12) further comprises a skirt portion (14) at its axially outer side, which is closest to the first sidewall (2), wherein the skirt portion (14) has an electrical volume resistivity lower than 10⁸ Ohm·cm.

4. The tire according to at least one of the previous claims, wherein the tread (10) further comprises a tread strip (11) having an electrical volume resistivity lower than 10⁸ Ohm·cm and extending transversely through the tread (10) from a radially outer surface of the tread to a radially inner portion of the tread.

5. The tire according to claim 4, wherein the tread (10) comprises at least one tread cap layer (13), preferably a tread cap layer (13) having an electrical volume resistivity higher than 10⁹ Ohm·cm, and one or more tread base layers (12, 12'), wherein the tread strip (11) extends through the at least one tread cap layer (13) to contact at least one of the tread base layers (12, 12'), the tread strip (11) preferably having a maximum width within a range of from 0.2 mm to 9 mm when measured in the axial direction of the tire.

6. The tire according to at least one of the previous claims, wherein the tire has a first tread base layer (12) and a second tread base layer (12'), wherein the first tread base layer (12) has an electrical volume resistivity lower than 10⁸ Ohm·cm, wherein the second tread base layer (12') has an electrical volume resistivity higher than 10⁹ Ohm·cm; and, optionally, wherein the tread strip (11) contacts at least the first tread base layer (12).

7. The tire according to at least one of the previous claims, wherein the first tread base (12) layer extends over at most 40% of the total axial width of the tread (10) and/or wherein the second tread base layer (12') extends over at least 60% of the total axial width of the tread (10).

8. The tire according to at least one of the previous claims, wherein the first tread base layer (12) and the second tread base layer (12') are arranged axially beside one another, and wherein the first tread base layer (12) is provided axially closer to the first sidewall (2) than the second tread base layer (12').

9. The tire according to at least one of the previous claims, wherein the tread (10) comprises: a first tread cap layer intended to contact the road; a second tread cap layer provided radially below the first tread cap layer; a first tread base layer (12) provided radially below the second tread cap layer; and a second tread base layer (12') provided radially below the second tread cap layer and axially beside the first tread base layer.

10. The tire according to at least one of the previous claims, wherein the first tread base layer (12) extends over less than 30% of the total axial width of the first tread cap layer and is in contact with the tread strip (11) at a radially inner end of the tread strip, and wherein the first tread base layer (12) is provided on the same lateral side of the tire (1) as the first sidewall (2).

11. The tire according to at least one of the previous claims, wherein one or more of the tread strip (11), the first sidewall (2), the first chafer (9) and the first tread based layer (12) comprise one or more of: a) a rubber composition having an electrical volume resistivity lower than 10⁷ Ohm·cm; b) a rubber composition comprising more than 50 phr of carbon black; and c) a rubber composition comprising carbon black having an iodine absorption of at least 100 g/kg.

12. The tire according to at least one of the previous claims, wherein one or more of: i) the at least one tread cap layer, ii) the second tread base layer, iii) the second sidewall; iv) the second chafer, v) the one or more belt plies, vi) the at least one carcass ply, and vii) an overlay of the tire comprise one or more of: a) a rubber composition having an electrical volume resistivity higher than 10⁹ Ohm·cm; b) a rubber composition comprising less than 45 phr of carbon black; and c) a rubber composition comprising carbon black having an iodine absorption of less than 90 g/kg.

13. The tire according to at least one of the previous claims, wherein each chafer (9, 9') contacts a radially inner end portion of the respective sidewall (2, 2') and extends to a portion radially below a bead (8) of the respective bead portion (7, 7').

14. The tire according to at least one of the previous claims, wherein the first sidewall (2) comprises a rubber composition having a tangent delta value higher than 0.1 and the second sidewall (2') comprises a rubber composition having a tangent delta value lower than 0.09.
